# EUROPÄISCHE PATENTSCHRIFT

(11) **EP 3 690 005 B1**
(45) Veröffentlichungstag und Bekanntmachung des Hinweises auf die Patenterteilung: **16.08.2023**
(21) Anmeldenummer: 19154720.7
(22) Anmeldetag: 31.01.2019
(51) Int. Cl.: C09K 17/46, E02D 19/22, E02D 19/16

(54) **INJEKTIONSMEDIUM ZUM ABDICHTEN VON BAUGRUND UND VERFAHREN ZUR HERSTELLUNG EINES INJEKTIONSMEDIUMS**
INJECTION MEDIUM FOR SEALING FOUNDATION SOIL AND METHOD FOR PRODUCING SAME
MILIEUX D'INJECTION PERMETTANT D'ÉTANCHÉIFIER LE TERRAIN À BÂTIR ET PROCÉDÉ DE FABRICATION D'UN MILIEUX D'INJECTION

(43) Veröffentlichungstag der Anmeldung: 05.08.2020
(73) Patentinhaber: Keller Holding GmbH, 63067 Offenbach/Main (DE)
(72) Erfinder: Pandrea, Paul, 63814 Mainaschaff (DE); Baermann, Axel, 20149 Hamburg (DE); Bohn, Cecilia, 60599 Frankfurt am Main (DE)
(74) Vertreter: Neumann Müller Oberwalleney Patentanwälte PartG mbB

(56) Entgegenhaltungen:
- DE-A1- 2 600 625
- JP-A- S6 123 683
- US-A- 3 294 563

## Beschreibung

Die Erfindung betrifft ein Injektionsmedium zum Abdichten von Baugrund und ein Verfahren zur Herstellung eines solchen Injektionsmediums.

Aus der US 3 294 563 A ist ein Injektionsmittel bekannt, wobei 35,0 ml einer 5,3 %-igen wässrigen Lösung von Zitronensäure mit 10,0 ml einer 4,0 %-igen Lösung von Natriumaluminat gemischt werden, und die Mischung mit Wasser auf 92,4 ml aufgefüllt wird, und zu dem resultierenden wässrigen System 7,6 ml einer Wasserglaslösung hinzugefügt werden.

Aus der DE 25 44 543 A1 ist ein Verfahren zum Befestigen von Böden durch Einspritzen von Härtungsmitteln bekannt. Hierfür wird ein Gemisch aus Wasser und Geliermittel und eine wässrige, Geliermittel enthaltende Wasserglaslösung als Härtungsmittel verwendet. Die Härtungsmittel werden miteinander verbunden und die resultierende Flüssigkeit in den Boden eingespritzt. Das Geliermittel wird aus der Gruppe bestehend aus Ester, Aldehyd, anorganischer Säure, organischer Säure, anorganischem Salz, organischem Salz, Zement und hydraulischer Komponente von Zement ausgewählt. Als organische Säure werden Malonsäure, Bernsteinsäure, Maleinsäure und Weinsteinsäure vorgeschlagen. Es ist vorgesehen, dass zuerst die wässrige, Geliermittel enthaltende Wasserglaslösung in den Boden gespritzt wird, um den Boden zu schneiden und zu lockern. Dann wird das Gemisch aus Wasser und Geliermittel in den gelockerten Boden gespritzt, wodurch die Härtemittel im Boden verbunden werden.

Aus der DE 26 00 625 A1 ist ein Verfahren zum Verfestigen oder Abdichten eines Bodens durch Einführen beziehungsweise Einspritzen eines Härtungsmittels bekannt. Hierfür wird ein Lösungsgemisch aus Wasserglas und saurem Reaktionsmittel als Härtungsmittel verwendet. Die Lösung wird so vermischt, dass der pH-Wert in einem Bereich zwischen schwach sauer und schwach alkalisch liegt. Als saures Reaktionsmittel als Härtungsmittel wird die Verwendung von organischen Säuren, beispielsweise Ameisensäure, Essigsäure, Malonsäure, Bernsteinsäure, Maleinsäure und Targarsäure angegeben. Es wird eine erste Flüssigkeit, die eine Lösung aus zumindest einem der Materialien aus der Gruppe bestehend aus Gelsteuermittel und Ton ist, und das Lösungsgemisch aus Wasserglas und saurem Reaktionsmittel separat in den Boden eingespritzt.

Aus der DE 102 18 771 A1 ist eine Baugrundumschließung zur Abdichtung einer Baugrube gegen Grundwasser bekannt. Zum Bilden einer wasserundurchlässigen Schicht wird ein Injektionsmedium eingesetzt, das einen Abdichtungsgrundstoff und einen Härter umfasst. Als Härter wird eine Lösung mit Metallsalzen vorgeschlagen. Das Injektionsmedium hat einen an das Grundwasser angepassten, neutralen pH-Wert zwischen 7 und 9.

Aus der EP 2 787 123 A1 ist ein Verfahren zum Erstellen einer Dichtsohle für eine Baugrubenumschließung bekannt. Hierfür wird ein Injektionsmedium in den Boden injiziert, das durch Mischen eines Dichtgrundstoffs mit Anmachwasser hergestellt ist. Vor dem Mischen wird das Anmachwasser durch Bindung von Metallionen mit einem Komplexbildner vorbehandelt, durch den die Metallionen im Anmachwasser gebunden werden. Konkret wird vorgeschlagen, dass das Anmachwasser aus 60-80 Gew.-% Wasser, 2-10 Gew.-% Wasserglas, 10-30 Gew.-% Kieselsol und 0,3-3 Gew.-% Komplexbildner besteht. Als Komplexbildner wird unter anderem Bernsteinsäure vorgeschlagen. Als Härter werden Metallsalze mit monovalenten bzw. polyvalenten Kationen eingesetzt.

Aus der JP S61 23683 A ist eine abdichtende Mischung zur Bodenstabilisierung bekannt, die mit Aluminium modifiziertes Natriumsilikat, Wasser und einen Härter enthält.

Tiefe Baugruben tauchen regelmäßig ins Grundwasser ein und benötigen zur Schaffung eines gut nutzbaren trockenen Bauraums eine Abdichtung. Zur seitlichen Abdichtung werden verschiedene wasserdichte Verbausysteme eingesetzt (beispielsweise Spundwände, Schlitzwände, Bohrpfahlwände, Trägerbohlverbaue mit wasserdichter Ausfachung). Wenn auf Grund der vorhandenen Geologie mit diesen Verbausystemen in wirtschaftlich sinnvoll erreichbaren Tiefen keine undurchlässigen Schichten erreicht werden können, dann muss die Baugrube auch nach unten hin abgedichtet werden. Dazu muss regelmäßig eine sogenannte Sohle eingebaut werden. Je nach Tiefenlage werden hochliegende, mittelhochliegende und tiefliegende Sohlen unterschieden.

Hochliegende Sohlen benötigen zur Sicherstellung der Auftriebssicherheit in der Regel Verankerungselement in die Tiefe. Um die Übertragung von Kräften zwischen Sohle und Anker sicherzustellen, werden hier nennenswerte Festigkeiten benötigt. Gängige Verfahren für diese Arten von Sohle sind Unterwasserbetonsohlen und Düsenstrahlsohlen.

Mittelhochliegende Sohlen liegen nicht unmittelbar unter dem Aushubniveau, sondern tiefer. Dadurch erhöht sich die Sicherheit bei kleineren Undichtigkeiten. Für die Auftriebssicherheit werden aber weiterhin Verankerungselemente benötigt. Diese Sohlen werden heute grundsätzlich im Düsenstrahlverfahren hergestellt. Das Düsenstrahlverfahren wird von der Anmelderin auch unter der Bezeichnung Soilcrete^{®} verwendet.

Bei Tiefliegenden Sohlen ist die Tiefe so gewählt, dass oberhalb der Sohle ein ausreichend schwerer Bodenkörper verbleibt, der die Auftriebssicherheit gewährleistet und eine zusätzliche Verankerung nicht erfordert. Diese Art von Sohlen benötigt, sofern sie nur abdichtende Funktion hat, keine Festigkeit über diejenige des Bodens hinaus, solange das Material ausreichend erosionsstabil ist. Gängige Verfahren für die Herstellung dieser Sohlen sind das Düsenstrahlverfahren (Soilcrete^{®}) bzw. Injektionen mit sogenannten Weichgelen.

Gegenüber dem Düsenstrahlverfahren haben Weichgele den Vorteil, dass dabei wesentlich weniger oder gar kein Bohrgut bzw. Rücklaufmaterial aus dem Düs- bzw. Injektionsverfahren anfällt. Bei den stetig steigenden Kosten für die Entsorgung bedeutet dies, dass Weichgelsohlen zunehmend erhebliche wirtschaftliche Vorteile gegenüber Düsenstrahlsohlen haben.

Da Weichgelsohlen jedoch wasserberührende Bauteile darstellen, sind bezüglich der Materialien strenge wasser- und umweltrechtliche Anforderungen zu erfüllen. Durch deren kontinuierliche Verschärfung sind bisher verwendete Rezepturen (beispielsweise Natronwasserglas und Natriumaluminathydrat) nicht mehr zulassungsfähig und müssen ersetzt werden.

Hiervon ausgehend liegt der vorliegenden Erfindung die Aufgabe zugrunde, eine Baugrubenumschließung vorzuschlagen, welche die wasser- und umweltrechtlichen Aspekte erfüllt und wirtschaftlich herstellbar ist.

Zur Lösung wird ein Injektionsmedium zum Abdichten von Baugrund vorgeschlagen, das eine Mischung aus Wasserglas und einer sauren Lösung als Härtungsmittel enthält, wobei die saure Lösung zumindest eine gelbildende Komponente aus der Gruppe der Hydroxycarbonsäuren enthält, wobei das Gemisch 12-25 Gew.-% Wasserglas, 1,0-8,0 Gew.-% der gelbildenden Komponente, einen möglichst geringen Gehalt an Metallen aus der Gruppe Aluminium, Arsen, Blei, Cadmium, Chrom, Kupfer, Nickel, Titan und Zink von zusammen weniger als 0,7 Gew.-% und Wasser als Rest, jeweils bezogen auf das Gesamtgewicht des Injektionsmediums, enthält.

Ein Vorteil ist, dass das Injektionsmedium einfach herstellbar und auf der Baustelle verarbeitbar ist. Das Injektionsmedium kann vor Ort oberirdisch gemischt werden, wobei es nach dem Mischen wässrig ist und als eine einzige Komponente in diesem Zustand in den Boden injiziert werden kann. Bei der anschließenden exothermen Reaktion kommt es zu einer Vernetzung der Silikate des Wasserglases, so dass im Boden eine gelartige Struktur entsteht. Dabei liegt ein weiterer Vorteil darin, dass die Kippzeit, das heißt die Zeit bis zum Einsetzen der exothermen Reaktion, durch entsprechendes Variieren der Konzentrationen von gelbildender Komponente und Wasserglas gesteuert werden kann. Die Verwendung einer gelbildenden Komponente aus der Gruppe der Hydroxycarbonsäuren, insbesondere aus der Gruppe der Fruchtsäuren, ist besonders umweltverträglich, da es sich um organische Substanzen handelt, die eine leichte biologische Abbaubarkeit haben.

Vorzugsweise wird das Mischungsverhältnis so gewählt, dass das Injektionsmedium einen pH-Wert von unter 7,0 aufweist, insbesondere zwischen 7,0 und 5,0. Eine solche leicht saure Mischung ermöglicht auf einfache Weise eine Annäherung an den Neutralbereich und führt damit zu einer besonders guten Umweltverträglichkeit, was anhand von biologischen Parametern beziehungsweise Versuchen an Testorganismen, wie Algen (Scenedesmus/Desmodesmus subspicatus), Daphnien (Daphnia magna) und/oder Leuchtbakterien in Versuchen nachgewiesen werden konnte.

Ein weiterer umweltrelevanter Parameter ist die elektrische Leitfähigkeit des Injektionsmediums beziehungsweise eines hieraus resultierenden Mischeluats. Dabei gilt allgemein, dass die elektrische Leitfähigkeit mit zunehmendem Anteil an Gelbildner und damit einhergehend zunehmendem Vernetzungsgrad steigt. Der Gelbildner kann beispielsweise eine elektrische Leitfähigkeit von weniger als 5.500 µS/cm aufweisen. Das Mischungsverhältnis zwischen Wasserglaslösung und Gelbildner kann so eingestellt werden, dass die elektrische Leitfähigkeit des daraus hergestellten Injektionsmediums unterhalb von 25.000 µS/cm liegt. Aus inversen Säulenversuchen eines mit dem Injektionsmedium behandelten Bodens mittels eines Eluats kann sich hieraus eine Leitfähigkeit von vorzugsweise unterhalb von 1000 µS/cm, insbesondere von weniger als 750 µS/cm des Mischeluats ergeben.

Ein weiterer für die Umweltverträglichkeit relevanter Parameter ist der Gehalt an gesamtem organischem Kohlenstoff (total organic carbon, kurz TOC-Wert). Hier gilt in analoger Form, dass der TOC-Wert mit zunehmendem Anteil an Gelbildner steigt. Das Mischungsverhältnis des Injektionsmediums ist vorzugsweise so eingestellt, dass die Freisetzung von organischen Komponenten aus dem Injektionsmedium während des Silikat-Vernetzungsprozesses möglichst gering ist. Insbesondere kann der TOC-Wert des Injektionsmediums unterhalb von 100 mg/l liegen, vorzugsweise unterhalb von 50 mg/l. Bei Werten zwischen 50 mg/l und 100 mg/l ist eine hohe biologische Abbaurate nachzuweisen, die im Injektionsmedium vorzugsweise bei über 75 % liegt und damit erreicht wird.

Insgesamt wird durch einen niedrigen pH-Wert im neutralen bis schwach sauren Bereich, eine geringe Leitfähigkeit beziehungsweise eine geringe Freisetzung von organischen Komponenten beim Aushärten der natürliche Chemismus des Bodens und des Grundwassers nicht verändert. Folglich wird eine Aktivierung beziehungsweise Lösung von im Boden natürlich oder künstlich vorhandenen umweltrelevanten Stoffen verhindert. Es können hohe biologische Abbauraten von größer 75 % erreicht werden. Der Durchlässigkeitsbeiwert kann unterhalb von 1 x 10 E-8 (Systemdurchlässigkeit) liegen. Ferner kann die Beständigkeit des Injektionsmediums im Boden mehr als 12 Monate betragen.

Aus der Gruppe der Hydroxycarbonsäuren werden vorzugsweise organische Fruchtsäuren als gelbildende Komponente verwendet, wahlweise Zitronensäure, Isozitronensäure, Zitronensäure-Monohydrat und/oder mindestens ein Salz der Zitronensäure verwendet. Die Komponenten können einzeln oder in Kombination verwendet werden. Die Verwendung von organischer Fruchtsäure, insbesondere Zitronensäure, Isozitronensäure, Zitronensäure-Monohydrat und/oder einem Salz der Zitronensäure, führt in vorteilhafter Weise zu einer besonders niedrigen elektrischen Leitfähigkeit und einer hohen biologischen Abbaurate, was sich insgesamt positiv auf die Umweltverträglichkeit des Injektionsmediums auswirkt. Es versteht sich, dass neben den oben genannten auch andere organische Fruchtsäuren verwendet werden können, wie beispielsweise Apfelsäure, Weinsäure oder Mandelsäure und/oder deren Salze.

Nach einer Ausführungsform kann das Injektionsmedium 12-25 Gew.-% Wasserglas, 1,0-8,0 Gew.-% der gelbildenden Komponente und 65-85 Gew.-% beziehungsweise Rest Wasser, jeweils bezogen auf das Gesamtgewicht des Injektionsmediums, enthalten. Für eine besonders gute Gelverfestigung kann der Anteil an gelbildender Komponente insbesondere mindestens 3,0 Gew.-% sein.

Das Injektionsmedium kann optional weitere Komponenten mit insbesondere bis zu 2,0 Gew.-% bezogen auf das Gesamtgewicht des Injektionsmediums beinhalten, wobei dieser Anteil an weiteren Komponenten zulasten des Wasseranteils gehen würde. Beispielsweise kann das Injektionsmedium zur Regulierung der Verarbeitbarkeit Aminosäure mit weniger als 1,0 Gew.-% bezogen auf das Gesamtgewicht des Injektionsmediums und/oder optional andere Zusatzstoffe in kleinen Mengen von bis zu 1,0 Gew.-% bezogen auf das Gesamtgewicht des Injektionsmediums enthalten.

Das Injektionsmedium enthält vorzugsweise keinerlei nennenswerten Metall- und Schwermetallgehalte in dem reinen Härtungsmittel. Dabei gilt allgemein, dass die Verwendung von Gelbildner mit hoher Reinheit, das heißt möglichst geringen Anteilen an Metallen und Schwermetallen, zu einer besseren Umweltverträglichkeit beitragen. Insbesondere können die Anteile an einzelnen Metallen und Schwermetallen im Härtungsmittel jeweils unterhalb der üblichen Nachweisgrenzen liegen. Beispielsweise kann das Härtungsmittel Aluminium mit weniger als 10 mg/kg, Titan mit weniger als 1 mg/kg, Arsen, Blei, Chrom, Kupfer, Nickel und/oder Zink mit jeweils weniger als 0,1 mg/kg, und/oder Cadmium und/oder Quecksilber mit jeweils weniger als 0,1 mg/kg, jeweils bezogen auf die Masse des Härtungsmittels beinhalten.

Das mit dem genannten Härtungsmittel hergestellte Injektionsmedium ist nachweislich ökotoxikologisch unbedenklich und umweltverträglich. Das Injektionsmedium kann ferner metallische Anteile aus der Wasserglaslösung beinhalten, wobei das Injektionsmedium insgesamt einen Anteil an metallischen Bestandteilen von vorzugsweise zusammen weniger als 0,7 Gew.-% enthält, wie beispielsweise Aluminium mit weniger als 0,2 Gew.-%, Titan mit weniger als 0,05 Gew.-% und/oder andere Metalle mit zusammen weniger als 0,45 Gew.-%.

Die Aufgabe wird ferner gelöst durch ein Verfahren zur Herstellung eines Injektionsmediums zum Abdichten von Baugrund, mit den Schritten: Herstellung einer sauren Lösung durch Mischen von Wasser mit zumindest einer gelbildenden Komponente aus der Gruppe der Hydroxycarbonsäuren, insbesondere aus der Gruppe der organischen Fruchtsäuren, und Mischen der sauren Lösung mit Wasserglas zur Erzeugung des Injektionsmediums, wobei zum Herstellen des Injektionsmediums 12-25 Gew.-% Wasserglas, 1,0-8,0 Gew.-% der gelbildenden Komponente, ein möglichst geringer Gehalt an Metall aus der Gruppe Aluminium, Arsen, Blei, Cadmium, Chrom, Kupfer, Nickel, Titan und Zink von zusammen weniger als 0,7 Gew.-% und Wasser als Rest, jeweils bezogen auf das Gesamtgewicht des Injektionsmediums verwendet werden.

Mit dem Verfahren ergeben sich im Wesentlichen dieselben Vorteile, wie im Zusammenhang mit dem Erzeugnis beschrieben, so dass auf obige Beschreibung Bezug genommen wird. Es versteht sich, dass alle im Zusammenhang mit dem Injektionsmedium als Erzeugnis genannten Merkmale auch für das Verfahren gelten und, umgekehrt, alle im Zusammenhang mit dem Verfahren genannten Merkmale auch auf das Erzeugnis übertragbar sind.

Das Injektionsmedium wird im Zweikomponenten-Verfahren aus einer Wasserglas-Lösung und der sauren Lösung als Reaktions- beziehungsweise Härtungsmittel hergestellt. Die Wasserglaslösung beinhaltet Wasserglas, insbesondere Natronwasserglas, und Wasser. Die Wasserglaslösung kann als Fertigprodukt bezogen und vor Ort auf der Baustelle entsprechend dem Bedarf auch in größeren Mengen vorgehalten werden.

Die saure Lösung wird vor Ort gesondert hergestellt, und zwar durch Mischen des Gelbildners in Wasser. Als Gelbildner wird vorzugsweise eine organische Fruchtsäure, insbesondere wahlweise Zitronensäure, Isozitronensäure, Zitronensäure-Monohydrat oder ein Salz der Zitronensäure verwendet. Die Erhärtungszeit kann nach Bedarf durch entsprechende Wahl der Konzentration des Gelbildners eingestellt werden. Vorteilhaft ist dabei insbesondere, dass die saure Lösung wegen ihrer Stabilität und guten Lagerbarkeit auch in größeren Mengen vorgemischt und in Tanks bevorratet werden kann. Dabei wird sich die Misch- und Lagerkapazität nach den Produktionserfordernissen richten.

Erst kurz vor dem eigentlichen Injektionsvorgang werden die saure Lösung und die Wasserglaslösung zusammengebracht und intensiv vermischt, wofür übliche Gerätschaften benutzt werden können. Das Mischungs- beziehungsweise Molverhältnis wird dabei in Abhängigkeit von der Umgebungstemperatur so gewählt, dass eine für die Verarbeitung brauchbare Kippzeit erreicht wird. Nach dem Mischen kann das Injektionsmedium in den Baugrund eingebracht werden. Wesentlicher Vorteil dabei ist, dass für den Injektionsvorgang nur ein einziger Stoff zu fördern und zu verarbeiten ist. Dies erleichtert das Handling erheblich und erlaubt ebenfalls den Einsatz von im Grundbau üblicher Pumpentechnik.

Das fertige Injektionsmedium kann beispielsweise eine Menge von 12-25 Gew.% Wasserglas, 1,0-8,0 Gew.-% Reaktionsmittel, optional weitere Komponenten mit zusammen weniger als 2,0 Gew.-%, mit Wasser als Rest, jeweils bezogen auf das Gesamtgewicht des Injektionsmediums beinhalten. Dabei beinhaltet das Wasserglas einen Feststoffanteil, der beispielsweise bei 30-40 Gew.-% liegen kann, und einen Wasseranteil, der dementsprechend beispielsweise bei 60-70 Gew.-% liegen kann.

Wie oben bereits beschrieben, kann die Verarbeitbarkeit, insbesondere auch unter Berücksichtigung der Umgebungstemperatur, durch entsprechende Einstellung des Mischungsverhältnisses zwischen Reaktionsmittel und Wasserglas, beziehungsweise der Konzentration der gelbildenden Komponente im Verhältnis zum Wasserglas verändert werden. Dabei gilt bei der vorliegenden Verwendung von organischen Fruchtsäuren als Gelbildner, dass eine Erhöhung des Anteils an Gelbildner zu einer Verlängerung der Reaktionszeit führt, beziehungsweise, dass eine Verringerung des Anteils an Gelbildner zu einer Verkürzung der Reaktionszeit (Kippzeit) führt. Ferner gilt, dass die Reaktionszeit des Injektionsmediums bei niedrigeren Umgebungstemperaturen prinzipiell länger ist, als bei höheren Umgebungstemperaturen. Entsprechend kann einer Verkürzung der Reaktionszeit infolge hoher Umgebungstemperaturen durch entsprechende Erhöhung des Anteils an Gelbildner entgegengewirkt werden. Umgekehrt kann einer Verlängerung der Reaktionszeit infolge geringer Temperaturen durch entsprechende Verringerung des Anteils an Gelbildner entgegengewirkt werden.

Eine erste beispielhafte Rezeptur kann 16 Gew.-% Wasserglas, 4 Gew.-% Gelbildner und Rest Wasser beinhalten. Eine zweite beispielhafte Rezeptur kann 16 Gew.-% Wasserglas, 4,5 Gew.-% Gelbildner und Rest Wasser beinhalten. Eine dritte beispielhafte Rezeptur kann 16 Gew.-% Wasserglas, 5,0 Gew.-% Gelbildner und Rest Wasser beinhalten. Dabei kann die erste Rezeptur eine Kippzeit von zwischen 30 min und 60 min, die zweite Rezeptur eine Kippzeit von zwischen 60 min und 120 min und die dritte Rezeptur eine Kippzeit von über 120 min aufweisen.

Es versteht sich, dass weitere Zusammensetzungen mit größeren Gewichtsanteilen an Wasserglas möglich sind. Beispielweise kann eine vierte beispielhafte Rezeptur 17 Gew.-% Wasserglas, 4 Gew.-% Gelbildner und Rest Wasser beinhalten. Eine fünfte beispielhafte Rezeptur kann 17 Gew.-% Wasserglas, 4,5 Gew.-% Gelbildner und Rest Wasser beinhalten. Eine sechste beispielhafte Rezeptur kann 17 Gew.-% Wasserglas, 5,0 Gew.-% Gelbildner und Rest Wasser beinhalten. Dabei kann die vierte Rezeptur eine Kippzeit von unter 30 min, die fünfte Rezeptur eine Kippzeit von zwischen 30 min und 60 min und die sechste Rezeptur eine Kippzeit von zwischen 60 und 150 min aufweisen.

Es sind weitere Zusammensetzungen mit größeren Anteilen an Wasserglas, beispielsweise mit 18 Gew.-% oder 20 Gew.-% oder anderen dazwischen oder darüber liegenden Anteilen möglich, sowie mit größeren Anteilen an Gelbildner, beispielsweise mit 5,5 Gew.-%, 6,0 Gew.-%, 6,5 Gew.-% oder mehr denkbar, mit Wasser als Rest.

Für alle genannten und weiter mögliche Zusammensetzungen gilt, dass diese optional weitere Zusatzkomponenten wie beispielsweise Aminosäuren von insgesamt bis zu 2,0 Gew.-% bezogen auf das Gesamtgewicht des Injektionsmediums beinhalten können, wobei dieser Anteil an Zusatzkomponenten zulasten des Anteils an Wasser gehen würde.

Der Anteil des Gelbildners im Verhältnis zur Wasserglaslösung ist abhängig vom Injektionszweck und der Verarbeitbarkeit des Injektionsmediums und kann insbesondere so gewählt werden, dass die Gelierungszeit (Kippzeit) zwischen 30 min und 120 min beträgt. Vorzugsweise wird das Injektionsmedium nach dem Mischen der sauren Lösung mit der Wasserglaslösung in weniger als 60 min in den Baugrund injiziert.

Alternativ oder ergänzend zur Variierung des Anteils an Gelbildner und der Zugabe von Zusatzkomponenten kann die Kippzeit auch dadurch verändert werden, dass zumindest eine der Komponenten aus der Gruppe Wasserglaslösung und saurer Lösung vor dem Mischen gekühlt wird und/oder, dass das fertig gemischte Injektionsmedium vor dem Injizieren gekühlt wird. Alternativ oder ergänzend können gekühlte oder lichtreflektierende Leitungen zur Förderung der Einzelkomponenten beziehungsweise der fertigen Mischung verwendet werden.

Der Gelbildner, insbesondere in Form von Zitronensäure, kann beispielsweise mit Hilfe von Hefekulturen in Biofermentern hergestellt werden. Dabei lassen sich gerade auch beim Herstellungsverfahren von Zitronensäure und Zitronensäure-Verbindungen verglichen mit bekannten Herstellungsverfahren deutliche Verbesserungen hinsichtlich der Umweltverträglichkeit und Nachhaltigkeit erzielen. Diese zeigen sich in einer erheblichen Reduzierung von Produktions-Abfallmengen und Wasserverbrauch sowie in der Optimierung spezieller Hefekulturen und Nutzung geschlossene Fermenter-Systeme und Bio-Reaktoren.

Da mit dem fertig gemischten Injektionsmedium nur noch eine einzige Komponente zu verarbeiten ist, kann grundsätzlich auf eine bekannte Injektionstechnik zurückgegriffen werden. Hierfür können Injektionslanzen durch ein wirtschaftliches Verfahren in den Baugrund eingebracht werden, beispielsweise durch Rammen, und gegebenenfalls mit einer Sperrmischung umhüllt werden, wie diese in der Injektionstechnik gängige Praxis ist. Soll der Materialverbrauch bzw. die Ausbreitung des Injektionsmediums räumlich begrenzt werden, kann gegebenenfalls eine Vorbehandlung des Bodens erfolgen, beispielsweise mit einem Deckel, hergestellt mit konventioneller Zementinjektion, welche von der Anmelderin unter der Bezeichnung Soilfrac^{®} verwendet wird. Anschließend erfolgt das Verpressen des Injektionsgutes, das heißt des Weichgels in den Untergrund. Dabei werden die Mengen und Druck so reguliert, dass der vorhandene Porenraum des Bodens möglichst gleichmäßig und vollständig gefüllt wird. Nach der Gelbildung verstopft dieses dann den Porenraum und reduziert so die Wasserdurchlässigkeit erheblich.

Das Injektionsmedium hat in zum Gel erhärtetem Zustand eine besonders geringe Durchlässigkeit beziehungsweise besonders gute Dichtungseigenschaften. So zeigen Vergleichsuntersuchungen mit herkömmlichen Rezepturen, nämlich mit Natriumhydrogenkarbonat und Natronwassergläsern mit 23 Gew.-% Silikat-Anteil, dass die Durchlässigkeitsbeiwerte des erfindungsgemäßen Injektionsmediums deutlich verbessert werden können, wenn als Gelbildner Zitronensäure, Isozitronensäure, Zitronensäure-Monohydrat und/oder Salze der Zitronensäure verwendet werden. Ein verbessertes Kondensationsvermögen sorgt zusätzlich dafür, dass diese geringere Durchlässigkeit auch erhalten bleibt, wenn der Anteil an Natronwasserglas nur 18 Gew.-% beträgt. Entsprechend verringern sich damit die Materialkosten für den Silikatanteil, das heißt das Natronwasserglas.

## Patentansprüche

1. Injektionsmedium zum Abdichten von Baugrund, hergestellt als Gemisch umfassend
eine Wasserglaslösung und
eine saure Lösung als Härtungsmittel, die zumindest eine gelbildende Komponente aus der Gruppe der Hydroxycarbonsäuren enthält,
**dadurch gekennzeichnet,**
**dass** das Gemisch 12-25 Gew.-% Wasserglas, 1,0-8,0 Gew.-% der gelbildenden Komponente, einen möglichst geringen Gehalt an Metallen aus der Gruppe Aluminium, Arsen, Blei, Cadmium, Chrom, Kupfer, Nickel, Titan und Zink von zusammen weniger als 0,7 Gew.-% und Wasser als Rest, jeweils bezogen auf das Gesamtgewicht des Injektionsmediums, enthält.

2. Injektionsmedium nach Anspruch 1,
**dadurch gekennzeichnet,**
**dass** die saure Lösung eine organische Fruchtsäure, insbesondere Zitronensäure, Isozitronensäure, Zitronensäure-Monohydrat und/oder zumindest ein Salz der Zitronensäure enthält.

3. Injektionsmedium nach Anspruch 1 oder 2,
**dadurch gekennzeichnet,**
**dass** dieses einen pH-Wert von unter 7,0 aufweist.

4. Injektionsmedium nach einem der Ansprüche 1 bis 3,
**dadurch gekennzeichnet,**
**dass** dieses eine Leitfähigkeit von weniger als 25.000 µS/cm aufweist und/oder einen Gehalt an gesamtem organischem Kohlenstoff (TOC-Wert) von weniger als 3,5 Gew.-% aufweist.

5. Injektionsmedium nach einem der Ansprüche 1 bis 4,
**dadurch gekennzeichnet,**
**dass** das Gemisch Aminosäure mit weniger als 1,0 Gew.-% bezogen auf das Gesamtgewicht des Injektionsmediums enthält.

6. Verfahren zur Herstellung eines Injektionsmediums zum Abdichten von Baugrund, mit den Schritten:
Herstellung einer sauren Lösung durch Mischen von Wasser mit zumindest einer gelbildenden Komponente aus der Gruppe der Hydroxycarbonsäuren, Mischen der sauren Lösung mit einer Wasserglaslösung zur Erzeugung des Injektionsmediums,
**dadurch gekennzeichnet, dass** 12-25 Gew.-% Wasserglas, 1,0-8,0 Gew.-% der gelbildenden Komponente, ein möglichst geringer Gehalt an Metall aus der Gruppe Aluminium, Arsen, Blei, Cadmium, Chrom, Kupfer, Nickel, Titan und Zink von zusammen weniger als 0,7 Gew.-% und Wasser als Rest, jeweils bezogen auf das Gesamtgewicht des Injektionsmediums verwendet werden.

7. Verfahren nach Anspruch 6,
**dadurch gekennzeichnet**,
als gelbildende Komponente eine organische Fruchtsäure, insbesondere Zitronensäure, Isozitronensäure, Zitronensäure-Monohydrat und/oder zumindest ein Salz der Zitronensäure verwendet wird.

8. Verfahren nach einem der Ansprüche 6 oder 7,
**dadurch gekennzeichnet,**
**dass** die gelbildende Komponente mit Hilfe von Hefekulturen in Biofermentern hergestellt wird.

9. Verfahren nach einem der Ansprüche 6 bis 8,
**dadurch gekennzeichnet,**
**dass** der Anteil der gelbildenden Komponente so gewählt wird, dass die Gelierungszeit (Kippzeit) zwischen 30 min und 120 min liegt

10. Verfahren nach einem der Ansprüche 6 bis 9,
**dadurch gekennzeichnet,**
**dass** das Injektionsmedium nach dem Mischen der sauren Lösung mit dem Wasserglas in weniger als 60 min in den Baugrund injiziert wird.

11. Verfahren nach einem der Ansprüche 6 bis 10,
**dadurch gekennzeichnet,**
**dass** zumindest eine der Komponenten Wasserglaslösung und saure Lösung vor dem Mischen gekühlt wird.

12. Verfahren nach einem der Ansprüche 6 bis 11,
**dadurch gekennzeichnet,**
**dass** das Injektionsmedium vor dem Injizieren in den Baugrund gekühlt wird und/oder,
**dass** zumindest eine der Komponenten Wasserglaslösung und saure Lösung zum Injizieren in den Baugrund durch eine lichtreflektierende Leitung gefördert wird.

## Claims

1. Injection medium for sealing foundation soil, produced as a mixture comprising:
a water glass solution and
an acidic solution as a curing agent, which contains at least one gel-forming component from the group of hydroxycarboxylic acids,
**characterised in**
**that** the mixture contains 12-25% by weight of water glass, 1.0-8.0% by weight of the gel-forming component, a preferably low content of metals from the group aluminium, arsenic, lead, cadmium, chromium, copper, nickel, titanium and zinc of together less than 0.7% by weight and water as remainder, each with respect to the total weight of the injection medium.

2. Injection medium according to claim 1,
**characterised in**
**that** the acidic solution contains an organic fruit acid, in particular citric acid, isocitric acid, citric acid monohydrate and/or at least one salt of citric acid.

3. Injection medium according to claim 1 or 2,
**characterised in**
**that** it has a pH value of less than 7.0.

4. Injection medium according to any one of claims 1 to 3,
**characterised in**
**that** it has a conductivity of less than 25,000 µS/cm and/or
has a total organic carbon (TOC) content of less than 3.5% by weight.

5. Injection medium according to any one of claims 1 to 4,
**characterised in**
**that** the mixture contains amino acid with less than 1.0% by weight with respect to the total weight of the injection medium.

6. Method of producing an injection medium for sealing foundation soil, comprising the steps:
producing an acidic solution by mixing water with at least one gel-forming component from the group of hydroxycarboxylic acids,
mixing the acidic solution with a water glass solution to produce the injection medium,
**characterised in that** 12-25 wt.% of water glass, 1.0-8.0 wt.% of the gel-forming component, a preferably low content of metal from the group aluminium, arsenic, lead, cadmium, chromium, copper, nickel, titanium and zinc of together less than 0.7 wt.% and water as remainder, each with respect to the total weight of the injection medium, are used.

7. Method according to claim 6,
**characterised in**
**that** an organic fruit acid, in particular citric acid, isocitric acid, citric acid monohydrate and/or at least one salt of citric acid is used as the gel-forming component.

8. Method according to one of claims 6 or 7,
**characterised in**
**that** the gel-forming component is produced with the help of yeast cultures in biofermenters.

9. Method according to any one of claims 6 to 8,
**characterised in**
**that** the proportion of the gel-forming component is selected so that the gelation time (tipping time) is between 30 min and 120 min.

10. Method according to any one of claims 6 to 9,
**characterised in**
**that** the injection medium is injected into the foundation soil in less than 60 min after mixing the acidic solution with the water glass.

11. Method according to any one of claims 6 to 10,
**characterised in**
**that** at least one of the components water glass solution and acid solution is cooled before mixing.

12. Method according to any one of claims 6 to 11,
**characterised in**
**that** the injection medium is cooled before being injected into the foundation soil and/or,
**that** at least one of the components water glass solution and acid solution is conveyed through a light-reflecting conduit for being injected into the foundation soil.

## Revendications

1. Milieu d'injection permettant d'étanchéifier le terrain à bâtir, fabriqué sous la forme d'un mélange comprenant
une solution de verre soluble et
une solution acide en tant qu'agent durcisseur, qui contient au moins un composant gélifiant du groupe des acides hydroxycarboxyliques,
**caractérisé en ce que**
le mélange contient 12-25 %/poids de verre soluble, 1,0-8,0 %/poids de composant gélifiant, une teneur la plus faible possible en métaux du groupe, aluminium, arsenic, plomb, cadmium, chrome, cuivre, nickel, titane et zinc au total de moins de 0,7 %/poids et de l'eau en tant que reste, en se référant respectivement au poids total du milieu d'injection.

2. Milieu d'injection selon la revendication 1,
**caractérisé en ce que**
la solution acide contient un acide de fruit organique, en particulier un acide citrique, un acide isocitrique, un monohydrate d'acide citrique et/ou au moins un sel d'acide citrique.

3. Milieu d'injection selon la revendication 1 ou 2,
**caractérisé en ce que**
celui-ci comporte une valeur de pH inférieure à 7,0.

4. Milieu d'injection selon l'une quelconque des revendications 1 à 3,
**caractérisé en ce que**
celui-ci comporte une conductibilité inférieure à 25 000 pS/cm et/ou une teneur en carbone organique total (valeur TOC) inférieure à 3,5 %/poids.

5. Milieu d'injection selon l'une quelconque des revendications 1 à 4,
**caractérisé en ce que**
le mélange contient de l'acide aminé avec moins de 1,0 %/poids en référence au poids total du milieu d'injection.

6. Procédé de fabrication d'un milieu d'injection permettant d'étanchéifier le terrain à bâtir, avec les étapes de :
préparer une solution acide par mélange d'eau avec au moins un composant gélifiant appartenant au groupe des acides hydroxycarboxyliques ,
mélanger la solution acide avec une solution de verre soluble pour produire le milieu d'injection,
**caractérisé en ce que** 12-25 %/poids en verre soluble, 1,0-8,0 %/poids du composant gélifiant, une teneur la plus faible possible en métal du groupe, aluminium, arsenic, plomb, cadmium, chrome, cuivre, nickel, titane et zinc au total de moins de 0,7 %/poids et de l'eau en tant que reste, sont utilisés en se référant respectivement au poids total du milieu d'injection.

7. Procédé selon la revendication 6,
**caractérisé en ce qu'**
un acide de fruit organique, en particulier un acide citrique, un acide isocitrique, un monohydrate d'acide citrique et/ou au moins un sel d'acide citrique est utilisé en tant que composant gélifiant.

8. Procédé selon l'une quelconque des revendications 6 ou 7,
**caractérisé en ce que**
le composant gélifiant est fabriqué à l'aide de cultures de levure dans des ferments biologiques.

9. Procédé selon l'une quelconque des revendications 6 à 8,
**caractérisé en ce que**
la part du composant gélifiant est choisie de telle manière que le temps de gélification (temps de basculement) se situe entre 30 minutes et 120 minutes.

10. Procédé selon l'une quelconque des revendications 6 à 9,
**caractérisé en ce que**
le milieu d'injection est injecté dans le terrain à bâtir après le mélange de la solution acide avec le verre soluble, en moins de 60 minutes.

11. Procédé selon l'une quelconque des revendications 6 à 10,
**caractérisé en ce qu'**
au moins un des composants, solution de verre soluble et solution acide, est refroidi avant mélange.

12. Procédé selon l'une quelconque des revendications 6 à 11,
**caractérisé en ce que**
le milieu d'injection est refroidi avant l'injection dans le terrain à bâtir
et/ou
**en ce qu'**au moins un des composants, solution de verre soluble et solution acide, est transporté par un conduit réfléchissant la lumière pour l'injection dans le terrain à bâtir.
